(19) Europäisches Patentamt
European Patent Office
Office européen des brevets

(11) **EP 2 821 825 A1**

# EUROPEAN PATENT APPLICATION
published in accordance with Art. 153(4) EPC

(12)

(43) Date of publication:
**07.01.2015 Bulletin 2015/02**

(21) Application number: **13754439.1**

(22) Date of filing: **28.02.2013**

(51) Int Cl.:
*G02B 6/10* (2006.01)        *G02F 1/13357* (2006.01)

(86) International application number:
**PCT/KR2013/001668**

(87) International publication number:
**WO 2013/129882 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **29.02.2012   KR 20120020739**

(71) Applicant: **Kolon Industries, Inc.
Gwacheon-si, Gyeonggi-do 427-800 (KR)**

(72) Inventors:
• **CHOI, Kwan Min
  Ansan-si
  Gyeonggi-do 426-210 (KR)**
• **DOO, Jun Kil
  Yongin-si
  Gyeonggi-do 446-771 (KR)**
• **JANG, Tae Gap
  Suwon-si
  Gyeonggi-do 442-888 (KR)**
• **KIM, Min Jeong
  Seoul 143-818 (KR)**

(74) Representative: **Ter Meer Steinmeister & Partner
Patentanwälte
Mauerkircherstrasse 45
81679 München (DE)**

(54) **LIGHT GUIDE PLATE AND BACKLIGHT UNIT**

(57)    This invention relates to a light guide plate and a backlight unit, and more particularly, to a light guide plate and a backlight unit, wherein the light guide plate includes a light incident part to which light is incident from a light source located at a lateral side of the light guide plate and which is imparted with patterns, in which the patterns are formed such that a pattern-dense region and a pattern-sparse region are periodically repeated, and the pattern density between the pattern-dense region and the pattern-sparse region varies in a gradation, thus increasing luminance uniformity without affecting the luminance.

FIG. 3

EP 2 821 825 A1

**Description**

**Technical Field**

The present invention relates to a light guide plate for use in a liquid crystal display, and to a backlight unit including the same.

**Background Art**

Useful as an optical display device, a liquid crystal display (which may be abbreviated to "LCD") is of an indirect light emission type which shows an image using an additional light source because it cannot emit light itself. It includes a backlight unit (which may be abbreviated to "BLU") as a light source element which is important in terms of determining the total brightness and uniformity of the LCD.

A typical example of BLU includes a cold cathode fluorescent lamp (CCFL) or an external electrode fluorescent lamp (EEFL). These days, drastically increasing is the use of a light emitting diode (LED) which is advantageous in view of energy saving, high brightness, partial control of brightness under specific conditions to thus maximize energy efficiency, high contrast to achieve outstanding image quality, and eco-friendly properties due to not containing mercury (Ag).

BLU includes light sources disposed on the lower or the lateral side thereof. When light sources are disposed on the lower side of BLU, a diffusion plate is provided to increase light uniformity. On the other hand, when light sources are disposed on the lateral side of BLU, a light guide plate is provided to adjust a light path so that laterally incident light travels forward and also to cause light to be uniformly emitted. Further, a diffusion sheet and a prism sheet are placed on the light guide plate or the diffusion plate, so that light is collected forward and is made uniform and thus reaches the liquid crystal panel. Moreover, a reflective sheet is provided under the light guide plate or the diffusion plate, so that light which deviates from the light path and does not arrive at the liquid crystal panel is reflected again to thus increase use efficiency of the light sources.

A direct-type BLU having LEDs distributed on the entire surface of the lower end thereof may exhibit high image quality but is expensive because of the use of a large number of LEDs. The use of the large number of LEDs may result in high power consumption and high heat generation, undesirably deteriorating the durability of products. Further, a diffusion plate is located at a predetermined interval such that the LEDs disposed on the rear of BLU are not visible from the front, and thereby the direct-type BLU is comparatively thicker than an edge-type BLU, and thus has design drawbacks.

Accordingly, the application range of an edge-type BLU having LED light sources distributed on the lateral side of the BLU is widened.

The edge-type BLU is manufactured using a light guide plate so that light travels forward by attaching light sources to at least one side of the BLU. Compared to the direct-type BLU, the edge-type BLU has a smaller number of LEDs, thus reducing the price, heat generation and thickness of the BLU. However, the edge-type BLU has relatively low brightness and makes it impossible to implement a function of partial control of an image.

With the goal of solving problems with the edge-type BLU, many attempts have been made recently. For example, LED light emission may be increased to enhance brightness. Also, the upper side of the light guide plate may be imparted with patterns such as prism, lenticular or microlens array (MLA) patterns so that the amount of light emitted to the front side through the light guide plate from the lateral side of the light guide plate may increase to enhance luminance.

Furthermore, when the lower end of the light guide plate is subjected to silk screen printing, laser processing or mechanical processing, laterally incident light may be uniformly emitted in a larger amount to the front side. Recently, thorough research into an imprinting process is ongoing.

Conventionally, a light guide plate has undergone mirror surface processing such that as much light as possible may travel forward when being incident to the light guide plate from the lateral side thereof at which the light sources are located. Mirror surface processing is a process for minimizing a surface roughness so as to maximize the amount of incident light. Due to such mirror surface processing, the upper side of the light guide plate disposed near the LEDs is very bright, and the mid portion between adjacent LEDs is dark, and hence hot spots where specific portions are seen to be brighter may be created. When the light guide plate is viewed from above, a difference in luminance between some portions of the light guide plate closer to LEDs and the others is large, and thus uniformity may decrease. Hence, an optical sheet such as a diffusion sheet should be additionally employed, undesirably deteriorating luminance.

To resolve such problems, use is made of a serration process for imparting various kinds of patterns on the light incident part, which is the lateral side of the light guide plate at which LEDs are located and to which light is incident. Although there may occur some damage to the total amount of light, uniformity may increase thus improving the quality of image.

However, when patterns are conventionally formed using laser processing or mechanical processing, they may cause light loss and may be limited in increasing uniformity. These problems have to be solved.

Typically, upper patterns such as lenticular, prism or microlens array patterns formed on the upper side of a light guide plate play a role in refracting laterally incident light to thus increase luminance. Further, when lower patterns are formed on the lower side of the light guide plate using screen printing, laser processing or mechanical processing, laterally incident light may collide with the lower patterns in the course of total internal reflection of the light, and thereby the direction of travel of light is converted to the front side of the light guide plate.

Conventionally, the light incident part that is the lateral side of the light guide plate to which light is incident from light sources is subjected to mirror surface processing, whereby a larger amount of light may be received without loss. However, incident light travels straightly to the lateral side of the light guide plate opposite the light incident part. Accordingly, the light incident part includes bright portions corresponding to the light sources and dark portions except for the bright portions, in which the bright and dark portions are clearly distinct, and thus hot spots brighter than the surroundings are created in the bright portions. To increase luminance uniformity, diffusion sheets more than needs have to be formed on the upper side of the light guide plate.

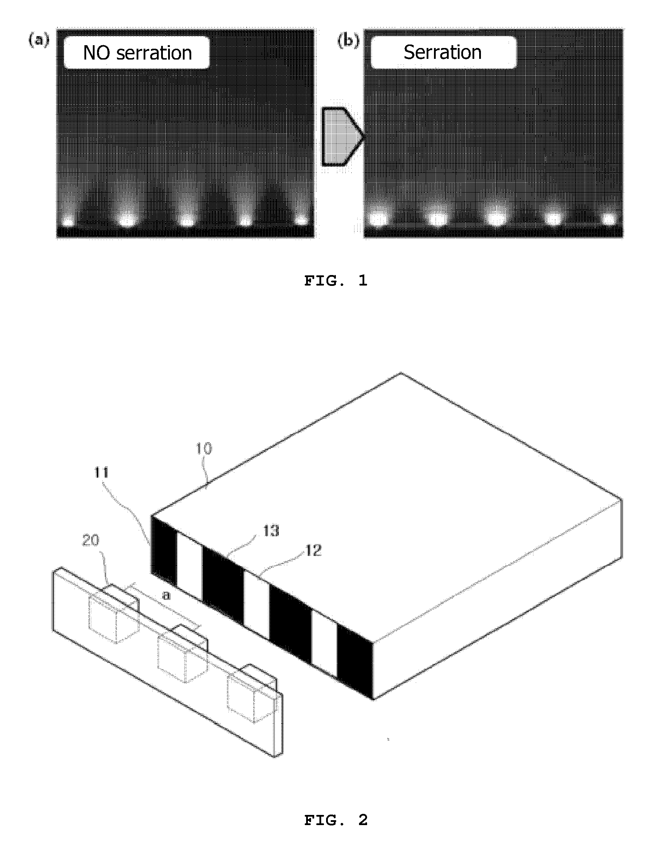

Hence, there has been recently developed a light guide plate configured such that the light incident part is imparted with patterns by means of a serration process. Furthermore, this light guide plate enables light incident thereon to be quite widely diffused thanks to the patterns formed on the light incident part thereof, thereby increasing luminance uniformity, compared to light guide plates having no patterns (FIG. 1).

However, since the amount of light incident on the light incident part of the light guide plate may vary depending on the location of the light sources, even when patterns are imparted throughout the light incident part of the light guide plate by a serration process, it is difficult to expect diffusion performance varying with the amount of light by the uniformly formed patterns, and thus limitations are imposed on an increase in the luminance uniformity.

Disclosure

Technical Problem

Accordingly, the present invention has been made keeping in mind the above problems occurring in the prior art, and an object of the present invention is to provide a light guide plate, wherein the density or size of patterns formed on the light incident part of the light guide plate may be adjusted, thus increasing the luminance uniformity of BLU.

**Technical Solution**

In order to accomplish the above object, a preferred first embodiment of the present invention provides a light guide plate, comprising a light incident part to which light is incident from a light source located at a lateral side of the light guide plate and which is imparted with patterns, wherein the patterns are formed in a gradation from a position having a maximum pattern density to a position having a minimum pattern density and also in a gradation from a position having a minimum pattern density to a position having a maximum pattern density.

In this embodiment, the patterns may be formed in a gradation depending on a distance between the patterns as defined by Relation I below.

$$b_{min} < b_1 < [b_n <]_{n-1} b_{max} \quad (I)$$

As such, $b_{min}$ or $b_{max}$ is the distance between adjacent patterns, $b_{min}$ is a shortest distance between the adjacent patterns, $b_{max}$ is a longest distance between the adjacent patterns, $[b_n <]_{n-1}$ is a repeating unit depending on n-1 in which $b_n$ changes in a sequence form when repeated by n-1 where n is an integer of at least 2.

In this embodiment, the patterns may be microlens patterns or lenticular patterns.

In this embodiment, the patterns may be microlens patterns, and $b_{min}$ and $b_{max}$ may be defined by Relations II and III below.

$$b_{min} > (1/10) \times r \quad (II)$$

$$b_{max} < 20 \times r \quad (III)$$

As such, $b_{min}$ is a shortest distance between adjacent patterns, $b_{max}$ is a longest distance between the adjacent patterns, and 2r is a cross-sectional diameter of the microlens patterns.

In this embodiment, the microlens patterns may have a cross-sectional diameter (2r) of 1 $\mu$m ~ 1 mm.

In this embodiment, the patterns may have a pattern period (b) as defined by Relation IV below.

$$\frac{1}{10} \times a < b < 10 \times a \quad (\text{IV})$$

As such, a is a light source period, b is the pattern period that is a period between positions having a maximum pattern density or a period between positions having a minimum pattern density.

In this embodiment, the patterns may be positive or negative patterns.

In this embodiment, the patterns may have a size larger in a pattern-dense region than in a pattern-sparse region.

Also, a preferred second embodiment of the present invention provides a light guide plate, comprising a light incident part to which light is incident from a light source located at a lateral side of the light guide plat and which is imparted with patterns, wherein the light incident part includes a bright portion corresponding to the light source and a dark portion except for the bright portion, and the bright portion has patterns and the dark portion has no patterns.

In this embodiment, the patterns may have a pattern period (c) as defined by Relation V below.

$$\frac{7}{10} \times a < c < \frac{13}{10} \times a \quad (\text{V})$$

As such, a is a light source period, c is the pattern period that is a period between positions selected from among a pattern start position, a mid position and a pattern end position, of a pattern formation region.

In this embodiment, the patterns may have positive or negative hemispherical microlens patterns, with a diameter of 1 $\mu$m ~ 3 mm.

In this embodiment, the patterns may be positive or negative lenticular patterns, with a length of 10 $\mu$m ~ 10 mm.

In this embodiment, the patterns may have a size larger in a pattern-dense region than in a pattern-sparse region.

In this embodiment, the light guide plate may be made of any material selected from the group consisting of a polycarbonate resin, a polystyrene resin, an acrylic resin, an olefin resin, copolymers thereof, mixtures thereof and derivatives thereof.

Also, a preferred third embodiment of the present invention provides a backlight unit, comprising the light guide plate as above.

## Advantageous Effects

As for a light guide plate according to the present invention, the density or size of patterns formed on the light incident part of the light guide plate can be adjusted, and thus the BLU can be increased in luminance uniformity without loss of luminance.

## Description of Drawings

FIG. 1 is of photographs illustrating luminance uniformity resulting from diffusing light emitted from light sources by a light guide plate (a), the light incident part of which was not subjected to serration, and by a light guide plate (b), the light incident part of which was subjected to serration;

FIG. 2 is a schematic view illustrating a light guide plate and light sources located at a lateral side thereof;

FIG. 3 illustrates light guide plates configured such that a pattern-dense region and a pattern-sparse region are sequentially formed on the light incident part of the light guide plate, wherein a light guide plate (A) includes patterns which are straightly formed in transverse and longitudinal directions, and a light guide plate (B) includes patterns formed at individual diamond-shaped intersections so that as many patterns as possible may be imparted on the same area;

FIG. 4 illustrates a light guide plate configured such that microlens patterns are formed on the light incident part thereof, wherein a pattern-dense region and a pattern-sparse region are periodically repeated;

FIG. 5 illustrates a light guide plate configured such that microlens patterns are formed only in the bright portions of the light incident part including bright portions and dark portions;

FIG. 6 illustrates a light guide plate configured such that lenticular patterns are formed only in the bright portions of the light incident part including bright portions and dark portions;

FIG. 7 is a graph illustrating luminance and luminance uniformity results of light guide plates of Comparative Examples of the present invention;

FIG. 8 is a graph illustrating changes in luminance and luminance uniformity depending on changes in the density of the negative microlens patterns formed on the light guide plates in Examples (1-1 to 1-7) according to the present invention;

FIG. 9 is a graph illustrating changes in luminance and luminance uniformity depending on changes in the density of the positive microlens patterns formed on the light guide plates in Examples (2-1 to 2-7) according to the present invention;

FIG. 10 is a graph illustrating changes in luminance and luminance uniformity depending on changes in the pattern period of the negative microlens patterns formed on the light guide plates in Examples (3-1 to 3-9) and Comparative Examples (3-1 to 3-4) according to the present invention;

FIG. 11 is a graph illustrating changes in luminance and luminance uniformity depending on changes in the pattern size of the negative microlens patterns formed on the light guide plates in Examples (4-1 to 4-7) according to the present invention;

FIG. 12 is a graph illustrating changes in luminance and luminance uniformity depending on changes in the area based on the centers of the bright portions, of the negative microlens patterns formed on the light guide plates in Examples (5-1 to 5-7) according to the present invention;

FIG. 13 is a graph illustrating changes in luminance and luminance uniformity depending on changes in the pattern size of the negative microlens patterns formed on the light guide plates in Examples (6-1 to 6-7) according to the present invention;

FIG. 14 is a graph illustrating changes in luminance and luminance uniformity depending on changes in the area based on the centers of the bright portions, of the lenticular patterns formed on the light guide plates in Examples (7-1 to 7-7) according to the present invention;

FIG. 15 is a graph illustrating changes in luminance and luminance uniformity depending on changes in the shortest distance between patterns, namely, changes in luminance and luminance uniformity depending on changes in the density of the pattern-dense region, of the negative microlens patterns formed on the light guide plates in Examples (8-1 to 8-6) and Comparative Example (8-1) according to the present invention; and

FIG. 16 is a graph illustrating changes in luminance and luminance uniformity depending on changes in the longest distance between patterns, namely, changes in luminance and luminance uniformity depending on changes in the density of the pattern-sparse region, of the negative microlens patterns formed on the light guide plates in Examples (9-1 to 9-5) and Comparative Examples (9-1 and 9-2) according to the present invention.

<Description of the Reference Numerals in the Drawings>

10: light guide plate, 11: light incident part
12: bright portion, 13: dark portion
20: light source
a: light source period, b: pattern period (when patterns are formed on a light incident part such that a pattern-dense region and a pattern-sparse region are periodically repeated), c: pattern period (when patterns are formed in the bright portions of a light incident part and are not formed in the dark portions)

**Mode for Invention**

Hereinafter, a detailed description will be given of the present invention.

The present invention addresses a light guide plate including a light incident part to which light is incident from light sources located at a lateral side of the light guide plate and which is imparted with patterns, wherein the patterns are formed in a gradation from a position having a maximum pattern density to a position having a minimum pattern density and also in a gradation from a position having a minimum pattern density to a position having a maximum pattern density.

Herein, the term "gradation" means that the density of patterns gradually changes (decreases) from a position having a maximum pattern density to a position having a minimum pattern density, and also gradually changes (increases) from a position having a minimum pattern density to a next position having a maximum pattern density, wherein the patterns are formed such that the positions having a maximum pattern density and the positions having a minimum pattern density are periodically provided.

The density of the position having a maximum pattern density and the density of the position having a minimum pattern density are a relative concept between the densities of the patterns formed in a gradation.

As illustrated in FIG. 2, the light incident part 11 of a light guide plate 10 indicates a surface of the light guide plate to which light is incident from light sources 20, and the light incident part 11 includes bright portions 12 corresponding to a plurality of light sources 20 located at a predetermined distance from the light guide plate 10, and dark portions 13 except for the bright portions 12. The distance between the centers of the light sources 20 refers to a light source period (a).

When the patterns are uniformly formed on the light incident part of the light guide plate, they allow light incident from the light sources to be more widely diffused, thus increasing luminance uniformity. However, limitations are imposed on increasing luminance uniformity because the amount of incident light may vary depending on the distance from the light sources even in the same light incident part.

Thus, the present invention pertains to a light guide plate, which is configured such that the density gradient of the patterns formed on the light incident part is periodically changed, thus increasing luminance uniformity without affecting the total luminance of the light guide plate. As mentioned above, the light guide plate is configured such that the patterns are formed on the light incident part so that positions having a maximum pattern density and positions having a minimum pattern density are periodically provided. As such, the gradient is a concept including a linear gradient, a non-linear gradient, etc.

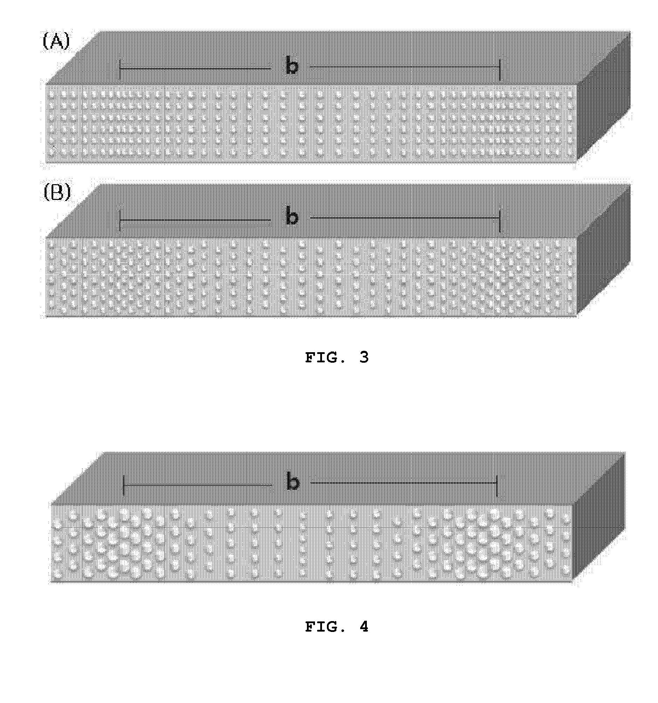

The distance between the positions having a maximum pattern density or the distance between the positions having a minimum pattern density is a pattern period (b). As changes in the density between the position having a maximum pattern density and the position having a minimum pattern density are shown in a gradation, that is, are gradually shown, light incident on the light guide plate is sequentially diffused to the surroundings without drastic changes in brightness, whereby the light guide plate may exhibit overall high luminance uniformity (FIG. 3).

Specifically, the patterns formed on the light incident part of the light guide plate according to the present invention may be provided in a gradation depending on the distance between the patterns as defined by Relation (I) below.

$$b_{min} < b_1 < [b_n <]_{n-1} b_{max} \quad (I)$$

As such, $b_{min}$ or $b_{max}$ is the distance between adjacent patterns, $b_{min}$ is the shortest distance between the adjacent patterns, $b_{max}$ is the longest distance between the adjacent patterns, $[b_n <]_{n-1}$ is a repeating unit depending on n-1 in which $b_n$ changes in a sequence form when repeated by n-1, where n is an integer of 2 or more. Preferably, n is an integer of 2 or more not more than 15.

For example, for n=2, Relation I shows $b_{min} < b_1 < b_2 < b_{max}$, and for n=3, Relation I shows $b_{min} < b_1 < b_2 < b_3 < b_{max}$. For n=4, Relation I may represent $b_{min} < b_1 < b_2 < b_3 < b_4 < b_{max}$.

Typically, the term "sequence" refers to a real-valued (complex-valued) function f(n) where N is a domain. The function value corresponding to the nature number (No.) n is represented by an which is an $n^{th}$ term or a general term, and $a_1$ refers to a first term (an initial term).

In the repeating unit $[b_n <]_{n-1}$, changing $b_n$ in a sequence form means that, for n=2, $b_n$ includes $b_1$ and $b_2$, and thus, the repeating unit $[b_n <]_{n-1}$ equals "$b_1 < b_2 <$", and for n=3, $b_n$ includes $b_1$, $b_2$ and $b_3$, and thus the repeating unit $[b_n <]_{n-1}$ equals "$b_1 < b_2 < b_3 <$".

The patterns may be microlens patterns or lenticular patterns.

Also, the patterns are microlens patterns, and $b_{min}$ and $b_{max}$ may be defined by Relations II and III below.

$$b_{min} > (1/10) \times r \quad (II)$$

$$b_{max} < 20 \times r \quad (III)$$

As such, $b_{min}$ is the shortest distance between adjacent patterns, $b_{max}$ is the longest distance between adjacent patterns, and 2r is the cross-sectional diameter of the microlens patterns. The microlens patterns may have a diameter of 1 $\mu$m $\sim$ 1 mm.

When $b_{min}$ is equal to or less than 1/10 x r, the degree of overlapping of the patterns may increase and thus only upper portions of the patterns may remain, making it impossible to exhibit optical performance of the patterns for converting the direction of travel of light. In contrast, when $b_{max}$ is equal to or more than 20 x r, the optical effect of the patterns for converting the direction of travel of light may become insignificant, making it impossible to secure the performance of the light guide plate according to the present invention. Preferable are (1/10) x r < $b_{min}$ < 2 x r and 5 x r < $b_{max}$ < 20 x r.

The pattern period (b) may be defined by Relation IV below.

$$\frac{1}{10} \times a < b < 10 \times a \quad (\text{IV})$$

As such, a is the light source period, b is the pattern period that is the distance between positions having a maximum pattern density or the distance between positions having a minimum pattern density. More preferably, the light source period (a) is an integer of 3 ~ 50 mm, and the pattern period (b) of the microlens patterns may be (1/2) x a < b < 4 x a.

The patterns formed on the light incident part may be positive or negative patterns, and particularly microlens patterns or lenticular patterns. The microlens patterns are effective at diffusion and concentration of light, and the lenticular patterns have a simple shape and may enhance processability even when processed on the lateral side of the light guide plate.

When the patterns are microlens patterns, the diameter thereof may be 1 $\mu$m ~ 1 mm. If the diameter thereof is less than 1 $\mu$m, instead of the lens patterns functioning to control the path of incident light, diffusion reflection may occur on the surface of the light guide plate and thus the amount of light which enters the light guide plate may actually decrease, undesirably deteriorating luminance. In contrast, when the diameter thereof exceeds 1 mm, light may enter the light guide plate through only two or three lenses instead of entering the light guide plate in various directions through a plurality of lenses to uniformly divide luminance, thus making it difficult to enhance luminance uniformity. For example, light may be incident in different directions through respective lenses, and the angle of incident light per lens may vary. For ten lenses, light is dividedly incident in ten directions, thus further increasing luminance uniformity. However, when light enters the light guide plate through only two or three large lenses, light may be emitted only in two or three directions, thus decreasing luminance uniformity. Preferably, the microlens patterns have a diameter of 50 ~ 500 $\mu$m.

Meanwhile, in order to maximize the diffusion properties of the pattern-dense regions of the light incident part, large patterns may be formed in the pattern-dense regions rather than in the pattern-sparse regions, thereby further increasing luminance uniformity. Imparting the patterns on the light incident part of the light guide plate means that the diffusion of light may increase through such patterns so as to increase luminance uniformity. Thus, as the diameter of the patterns in the pattern-dense regions is larger, high luminance uniformity may result.

As mentioned above, the light guide plate according to the present invention includes the light incident part having patterns formed in a different density gradient to exhibit light diffusion effects so as to enhance luminance uniformity. With the aim of maximizing an increase in luminance uniformity by virtue of the light diffusion effects, the light incident part may be configured such that patterns may be formed only in the bright portions and are not formed in the dark portions. This shows an extreme density gradient of the bright portions and the dark portions of the light incident part, thereby exhibiting more improved luminance uniformity while overcoming problems with patterns formed throughout the light incident part of the light guide plate where the pattern density is higher in the bright portions than in the dark portions and thus the density of a resin for the light guide plate may decrease to undesirably result in poor reliability under relatively high temperature and high humidity. As such, luminance uniformity may be increased depending on changes in the pattern density or size in the bright portions.

When the patterns are formed only in the bright portions, the pattern period (c) may be defined by Relation V below.

$$\frac{7}{10} \times a < c < \frac{13}{10} \times a \quad (\text{V})$$

As such, a is the light source period, c is the pattern period that is the period between positions selected from among a pattern start position, a mid position and a pattern end position, of a pattern formation region. More preferably, the light source period (a) may be an integer of 3 ~ 50 mm, and the pattern period (b) of the microlens patterns may be (9/10) x a < c < (11/10) x a.

When the patterns are positive or negative hemispherical microlens patterns, the diameter thereof may be 1 $\mu$m ~ 3 mm. If the diameter of these patterns is less than 1 $\mu$m, luminance may decrease. In contrast, if the diameter thereof exceeds 3 mm, luminance uniformity may decrease. Preferably, the microlens patterns have a diameter of 10 $\mu$m ~ 1 mm. The reason why these patterns have a size of 1 $\mu$m ~ 3 mm larger than 1 $\mu$m ~ 1 mm corresponding to the diameter of microlens patterns having a density gradient and formed throughout the light incident part is to minimize the loss of light when light emitted from the LEDs may not fully enter the light guide plate including the bright portions having patterns and the dark portions having no patterns.

Also, when the patterns are positive or negative lenticular patterns, the length thereof may be 10 $\mu$m ~ 10 mm. If the length of the patterns is less than 10 $\mu$m, luminance may decrease. In contrast, if the length thereof exceeds 10 mm, luminance uniformity may decrease. Preferably, the lenticular patterns have a length of 500 $\mu$m ~ 5 mm. For

microlens patterns, the surroundings of the lenses, especially the upper and lower portions of the lenses are closed and thus a short circuit may occur. On the other hand, for lenticular lenses, the upper and lower portions thereof are connected, and thus, even when light emitted from LEDs is emitted upward or downward, the loss of light is relatively lower in lenticular lenses than in the microlenses. Accordingly, an improvement in luminance uniformity may result even in the presence of sufficiently large patterns. As necessary, a size of a lenticular lens may be increased to the extent that an LED may be fully enclosed with a lenticular lens. For example, when an LED having a size of 5 mm is provided, a lenticular lens having a diameter of 5 mm is formed, so that the LED may be exactly placed in the lenticular lens.

According to the present invention, the light guide plate may be made of any material selected from the group consisting of a polycarbonate resin, a polystyrene resin, an acrylic resin, an olefin resin, copolymers thereof, mixtures thereof and derivatives thereof.

Also, the patterns formed on the light guide plate may be formed using a process such as laser processing, mechanical processing, silk screen printing, imprinting or ink-jetting.

In addition, the present invention addresses a backlight unit, which includes the light guide plate as described above and can have improved luminance uniformity without loss of luminance.

A better understanding of the present invention may be obtained through the following examples which are set forth to illustrate, but are not to be construed to limit the present invention, which will be apparent to those skilled in the art.

[Comparative Examples 1-1 to 1-3]

Performed was a serration process for forming patterns on the light incident part of a light guide plate depending on the pattern shape, pattern size and pattern interval as shown in Table 1 below.

The pattern interval designates the distance between the centers of individual patterns.

Comparative Example 1-1

A light guide plate was manufactured by co-extrusion of a polymethylmethacrylate resin (Grade HP202, available from LG MMA).

The total thickness of the light guide plate was 3 mm. As for the extruded light guide plate, the light incident part on which light is incident from light sources was subjected to mirror surface processing.

Comparative Example 1-2

A serration process was applied to the light incident part of the light guide plate having been subjected to mirror surface processing in Comparative Example 1-1. Using a bite in a pyramidal shape with a base length of 300 μm, a height of 150 μm, an angle of 45° relative to the base and an apex angle of 90°, the light guide plate was subjected to serration perpendicular thereto, so that prism patterns were uniformly formed without intervals therebetween throughout the light incident part. When the prism patterns were continuously processed, they were made in serrated form with both positive and negative forms.

Comparative Example 1-3

The following serration process was applied to the light incident part of the light guide plate having been subjected to mirror surface processing in Comparative Example 1-1, so that negative microlens patterns were uniformly formed at an interval of 300 μm throughout the light incident part.

A dry film photoresist ((DFR), Grade FF-1000, Accuimage, available from KOLON Industries) was laminated on a Cu plate, a film having spherical patterns with a diameter of 300 μm was placed thereon, and photoexposure was then performed. The Cu plate was developed, so that the spherical patterns were exposed, followed by etching, giving negative microlens patterns. The negative microlens patterns on the Cu plate were transferred using a silicone resin, thus producing a film mold having positive microlens patterns. A UV curable resin was applied on the lateral side of the light guide plate, the film mold was pressed, and UV curing was carried out, thereby completing the serration process for forming negative microlens patterns on the lateral side of the light guide plate.

[Table 1]

| C.Ex. | Pattern shape | Pattern size | Pattern interval |
|-------|---------------|--------------|------------------|
| 1-1   | -             | -            | -                |

(continued)

| C.Ex. | Pattern shape | Pattern size | Pattern interval |
|---|---|---|---|
| 1-2 | Prism | Base 300 $\mu$m Height 150 $\mu$m | Patterns are uniformly processed without intervals throughout light incident part |
| 1-3 | Negative microlens | Diameter 300 $\mu$m | Patterns are uniformly processed at interval of 300 $\mu$m throughout light incident part |

[Examples 1-1 to 1-7]

Light guide plates were manufactured in the same manner as in Comparative Example 1-3, with the exception that a serration process for forming patterns on the light incident part of the light guide plate was performed under given conditions of the pattern shape, pattern size, pattern interval and pattern period as shown in Table 2 below.

As such, the pattern interval designates the distance between adjacent patterns, and the pattern period (b) is determined by measuring the distance between positions having a maximum pattern density.

[Table 2]

| Ex. | Pattern shape | Pattern size | Pattern interval | Pattern period (b) |
|---|---|---|---|---|
| 1-1 | Negative microlens | Diameter 300 $\mu$m | Shortest distance between patterns 50 $\mu$m, Longest distance between patterns 300 $\mu$m | 5 mm |
| 1-2 | Negative microlens | Diameter 300 $\mu$m | Shortest distance between patterns 50 $\mu$m, Longest distance between patterns 500 $\mu$m | 5 mm |
| 1-3 | Negative microlens | Diameter 300 $\mu$m | Shortest distance between patterns 50 $\mu$m, Longest distance between patterns 1 mm | 5 mm |
| 1-4 | Negative microlens | Diameter 300 $\mu$m | Shortest distance between patterns 100 $\mu$m, Longest distance between patterns 500 $\mu$m | 5 mm |
| 1-5 | Negative microlens | Diameter 300 $\mu$m | Shortest distance between patterns 100 $\mu$m, Longest distance between patterns 1 mm | 5 mm |
| 1-6 | Negative microlens | Diameter 300 $\mu$m | Shortest distance between patterns 100 $\mu$m, Longest distance between patterns 1.5 mm | 5 mm |
| 1-7 | Negative microlens | Diameter 300 $\mu$m | Shortest distance between patterns 100 $\mu$m, Longest distance between patterns 2 mm | 5 mm |

[Examples 2-1 to 2-7]

Light guide plates were manufactured in the same manner as in Examples 1-1 to 1-7, with the exception that a serration process for forming positive microlens patterns on the light incident part of the light guide plate was performed under given conditions of the pattern shape, pattern size, pattern interval and pattern period as shown in Table 3 below.

[Table 3]

| Ex. | Pattern shape | Pattern size | Pattern interval | Pattern period (b) |
|---|---|---|---|---|
| 2-1 | Positive microlens | Diameter 300 $\mu$m | Shortest distance between patterns 50 $\mu$m, Longest distance between patterns 300 $\mu$m | 5 mm |
| 2-2 | Positive microlens | Diameter 300 $\mu$m | Shortest distance between patterns 50 $\mu$m, Longest distance between patterns 500 $\mu$m | 5 mm |
| 2-3 | Positive microlens | Diameter 300 $\mu$m | Shortest distance between patterns 50 $\mu$m, Longest distance between patterns 1 mm | 5 mm |

(continued)

| Ex. | Pattern shape | Pattern size | Pattern interval | Pattern period (b) |
|---|---|---|---|---|
| 2-4 | Positive microlens | Diameter 300 $\mu$m | Shortest distance between patterns 100 $\mu$m, Longest distance between patterns 500 $\mu$m | 5 mm |
| 2-5 | Positive microlens | Diameter 300 $\mu$m | Shortest distance between patterns 100 $\mu$m, Longest distance between patterns 1 mm | 5 mm |
| 2-6 | Positive microlens | Diameter 300 $\mu$m | Shortest distance between patterns 100 $\mu$m, Longest distance between patterns 1.5 mm | 5 mm |
| 2-7 | Positive microlens | Diameter 300 $\mu$m | Shortest distance between patterns 100 $\mu$m, Longest distance between patterns 2 mm | 5 mm |

[Examples 3-1 to 3-9 and Comparative Examples 3-1 to 3-4]

Light guide plates were manufactured in the same manner as in Comparative Example 1-3, with the exception that a serration process for forming patterns on the light incident part of the light guide plate was performed at different pattern periods under given conditions of the pattern shape, pattern size and pattern interval as shown in Table 4 below.

[Table 4]

| | Pattern shape | Pattern size | Pattern interval | Pattern period (b) |
|---|---|---|---|---|
| C.Ex. 3-1 | Negative microlens | Diameter 50 $\mu$m | Shortest distance between patterns 50 $\mu$m, Longest distance between patterns 1 mm | 300 $\mu$m |
| C.Ex. 3-2 | Negative microlens | Diameter 50 $\mu$m | Shortest distance between patterns 50 $\mu$m, Longest distance between patterns 1 mm | 500 $\mu$m |
| Ex. 3-1 | Negative microlens | Diameter 50 $\mu$m | Shortest distance between patterns 50 $\mu$m, Longest distance between patterns 100 mm | 1 mm |
| Ex. 3-2 | Negative microlens | Diameter 50 $\mu$m | Shortest distance between patterns 50 $\mu$m, Longest distance between patterns 1 mm | 3 mm |
| Ex. 3-3 | Negative microlens | Diameter 50 $\mu$m | Shortest distance between patterns 50 $\mu$m, Longest distance between patterns 1 mm | 4 mm |
| Ex. 3-4 | Negative microlens | Diameter 50 $\mu$m | Shortest distance between patterns 50 $\mu$m, Longest distance between patterns 1 mm | 5 mm |
| Ex. 3-5 | Negative microlens | Diameter 50 $\mu$m | Shortest distance between patterns 50 $\mu$m, Longest distance between patterns 1 mm | 7 mm |
| Ex. 3-6 | Negative microlens | Diameter 50 $\mu$m | Shortest distance between patterns 50 $\mu$m, Longest distance between patterns 1 mm | 10 mm |
| Ex. 3-7 | Negative microlens | Diameter 50 $\mu$m | Shortest distance between patterns 50 $\mu$m, Longest distance between patterns 1 mm | 15 mm |
| Ex. 3-8 | Negative microlens | Diameter 50 $\mu$m | Shortest distance between patterns 50 $\mu$m, Longest distance between patterns 1 mm | 20 mm |
| Ex. 3-9 | Negative microlens | Diameter 50 $\mu$m | Shortest distance between patterns 50 $\mu$m, Longest distance between patterns 1 mm | 35 mm |
| C.Ex. 3-3 | Negative microlens | Diameter 50 $\mu$m | Shortest distance between patterns 50 $\mu$m, Longest distance between patterns 1 mm | 50 mm |
| C.Ex. 3-4 | Negative microlens | Diameter 50 $\mu$m | Shortest distance between patterns 50 $\mu$m, Longest distance between patterns 1 mm | 65 mm |

[Examples 4-1 to 4-7]

Light guide plates were manufactured in the same manner as in Comparative Example 1-3, with the exception that a serration process for forming patterns on the light incident part of the light guide plate was performed at different pattern sizes under given conditions of the pattern shape, pattern interval and pattern period as shown in Table 5 below.

[Table 5]

| Ex. | Pattern shape | Pattern size | Pattern interval | Pattern period (b) |
|-----|---------------|--------------|------------------|--------------------|
| 4-1 | Negative microlens | Diameter 30 $\mu$m | Shortest distance between patterns 50 $\mu$m, Longest distance between patterns 1 mm | 5 mm |
| 4-2 | Negative microlens | Diameter 50 $\mu$m | Shortest distance between patterns 50 $\mu$m, Longest distance between patterns 1 mm | 5 mm |
| 4-3 | Negative microlens | Diameter 70 $\mu$m | Shortest distance between patterns 50 $\mu$m, Longest distance between patterns 1 mm | 5 mm |
| 4-4 | Negative microlens | Diameter 100 $\mu$m | Shortest distance between patterns 50 $\mu$m, Longest distance between patterns 1 mm | 5 mm |
| 4-5 | Negative microlens | Diameter 300 $\mu$m | Shortest distance between patterns 50 $\mu$m, Longest distance between patterns 1 mm | 5 mm |
| 4-6 | Negative microlens | Diameter 500 $\mu$m | Shortest distance between patterns 50 $\mu$m, Longest distance between patterns 1 mm | 5 mm |
| 4-7 | Negative microlens | Diameter 700 $\mu$m | Shortest distance between patterns 50 $\mu$m, Longest distance between patterns 1 mm | 5 mm |

[Examples 5-1 to 5-7]

Light guide plates were manufactured in the same manner as in Comparative Example 1-3, with the exception that a serration process for forming patterns on the light incident part of the light guide plate was performed at different pattern formation widths based on the centers of the bright portions under given conditions of the pattern shape, pattern size, pattern interval and pattern period as shown in Table 6 below, in which the patterns were formed only in the bright portions of the light incident part of the light guide plate, corresponding to the light sources.
The patterns of the bright portions were uniformly formed by an interval of 30 $\mu$m. To evaluate the effects of the patterns formed only in the bright portions depending on the pattern formation width in the bright portions, the patterns were formed at different pattern formation widths so that the total area where the patterns were formed was adjusted. Also, the patterns were designed to be formed at individual diamond-shaped intersections so that as many patterns as possible could be imparted over a predetermined area (FIG. 4).

[Table 6]

| Ex. | Pattern shape | Pattern size | Pattern interval | Pattern period (c) | Pattern formation width based on centers of bright portions |
|-----|---------------|--------------|------------------|--------------------|-------------------------------------------------------------|
| 5-1 | Negative microlens | Diameter 300 $\mu$m | 30 $\mu$m | 5 mm | 300 $\mu$m (only one pattern line) |
| 5-2 | Negative microlens | Diameter 300 $\mu$m | 30 $\mu$m | 5 mm | 500 $\mu$m |
| 5-3 | Negative microlens | Diameter 300 $\mu$m | 30 $\mu$m | 5 mm | 750 $\mu$m |
| 5-4 | Negative microlens | Diameter 300 $\mu$m | 30 $\mu$m | 5 mm | 1 mm |
| 5-5 | Negative microlens | Diameter 300 $\mu$m | 30 $\mu$m | 5 mm | 1.5 mm |

(continued)

| Ex. | Pattern shape | Pattern size | Pattern interval | Pattern period (c) | Pattern formation width based on centers of bright portions |
|-----|---------------|--------------|------------------|--------------------|------------------------------------------------------------|
| 5-6 | Negative microlens | Diameter 300 $\mu$m | 30 $\mu$m | 5 mm | 2 mm |
| 5-7 | Negative microlens | Diameter 300 $\mu$m | 30 $\mu$m | 5 mm | 3 mm |

[Examples 6-1 to 6-7]

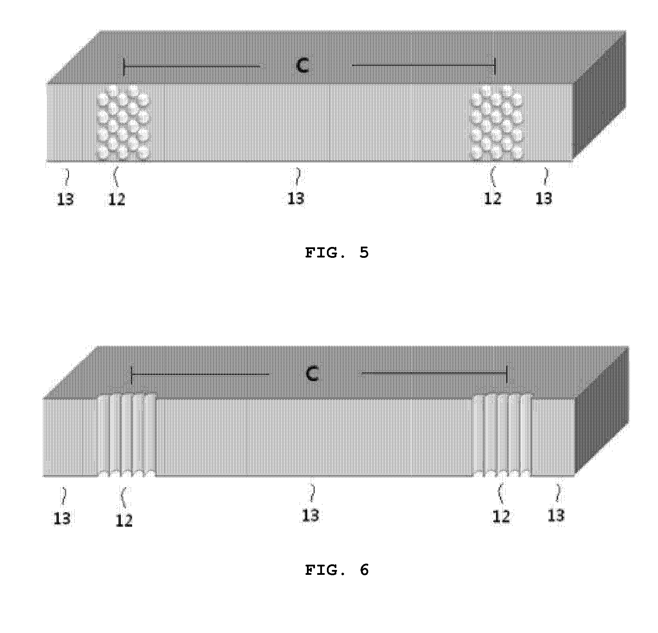

Light guide plates were manufactured in the same manner as in Examples 5-1 to 5-7, with the exception that a serration process for forming patterns on the light incident part of the light guide plate was performed at different pattern sizes under given conditions of the pattern shape, pattern interval, pattern period, and pattern formation width based on the centers of the bright portions as shown in Table 7 below (FIG. 5).

[Table 7]

| Ex. | Pattern shape | Pattern size | Pattern interval | Pattern period (c) | Pattern formation width based on centers of bright portions |
|-----|---------------|--------------|------------------|--------------------|------------------------------------------------------------|
| 6-1 | Negative microlens | Diameter 30 $\mu$m | 30 $\mu$m | 5 mm | 1.5 mm |
| 6-2 | Negative microlens | Diameter 50 $\mu$m | 30 $\mu$m | 5 mm | 1.5 mm |
| 6-3 | Negative microlens | Diameter 100 $\mu$m | 30 $\mu$m | 5 mm | 1.5 mm |
| 6-4 | Negative microlens | Diameter 300 $\mu$m | 30 $\mu$m | 5 mm | 1.5 mm |
| 6-5 | Negative microlens | Diameter 500 $\mu$m | 30 $\mu$m | 5 mm | 1.5 mm |
| 6-6 | Negative microlens | Diameter 600 $\mu$m | 30 $\mu$m | 5 mm | 1.5 mm |
| 6-7 | Negative microlens | Diameter 700 $\mu$m | 30 $\mu$m | 5 mm | 1.5 mm |

[Examples 7-1 to 7-7]

Light guide plates were manufactured in the same manner as in Examples 5-1 to 5-7, with the exception that a serration process for forming negative lenticular patterns on the light incident part of the light guide plate was performed at different pattern formation widths based on the centers of the bright portions under given conditions of the pattern shape, pattern size, pattern interval and pattern period as shown in Table 8 below (FIG. 6).

[Table 8]

| Ex. | Pattern shape | Pattern size | Pattern interval | Pattern period (c) | Pattern formation width based on centers of bright portions |
|-----|---------------|--------------|------------------|--------------------|------------------------------------------------------------|
| 7-1 | Negative lenticular | Diameter 300 $\mu$m | No pattern interval | 5 mm | 300 $\mu$m (only one pattern line) |
| 7-2 | Negative lenticular | Diameter 300 $\mu$m | No pattern interval | 5 mm | 500 $\mu$m |
| 7-3 | Negative lenticular | Diameter 300 $\mu$m | No pattern interval | 5 mm | 750 $\mu$m |

(continued)

| Ex. | Pattern shape | Pattern size | Pattern interval | Pattern period (c) | Pattern formation width based on centers of bright portions |
|---|---|---|---|---|---|
| 7-4 | Negative lenticular | Diameter 300 $\mu$m | No pattern interval | 5 mm | 1 mm |
| 7-5 | Negative lenticular | Diameter 300 $\mu$m | No pattern interval | 5 mm | 2 mm |
| 7-6 | Negative lenticular | Diameter 300 $\mu$m | No pattern interval | 5 mm | 3 mm |
| 7-7 | Negative lenticular | Diameter 300 $\mu$m | No pattern interval | 5 mm | 4 mm |

[Examples 8-1 to 8-6 and Comparative Example 8-1]

Light guide plates were manufactured in the same manner as in Comparative Example 1-3, with the exception that a serration process for forming patterns on the light incident part of the light guide plate was performed at different shortest distances between patterns, of the pattern interval, under given conditions of the pattern shape, pattern size and pattern period as shown in Table 9 below. Briefly, by changing the density of the pattern-dense regions, respective light guide plates were manufactured.
As such, the pattern interval designates the distance between adjacent patterns, and the pattern period (b) is obtained by measuring the distance between positions having a maximum pattern density.

[Table 9]

| | Pattern shape | Pattern size | Pattern interval | Pattern period (b) |
|---|---|---|---|---|
| C.Ex.8 -1 | Negative microlens | Diameter 100 $\mu$m | Shortest distance between patterns 5 $\mu$m, Longest distance between patterns 500 $\mu$m | 4 mm |
| Ex.8-1 | Negative microlens | Diameter 100 $\mu$m | Shortest distance between patterns 10 $\mu$m, Longest distance between patterns 500 $\mu$m | 4 mm |
| Ex.8-2 | Negative microlens | Diameter 100 $\mu$m | Shortest distance between patterns 20 $\mu$m, Longest distance between patterns 500 $\mu$m | 4 mm |
| Ex.8-3 | Negative microlens | Diameter 100 $\mu$m | Shortest distance between patterns 40 $\mu$m, Longest distance between patterns 500 $\mu$m | 4 mm |
| Ex.8-4 | Negative microlens | Diameter 100 $\mu$m | Shortest distance between patterns 60 $\mu$m, Longest distance between patterns 500 $\mu$m | 4 mm |
| Ex. 8-5 | Negative microlens | Diameter 100 $\mu$m | Shortest distance between patterns 100 $\mu$m, Longest distance between patterns 500 $\mu$m | 4 mm |
| Ex. 8-6 | Negative microlens | Diameter 100 $\mu$m | Shortest distance between patterns 200 $\mu$m, Longest distance between patterns 500 $\mu$m | 4 mm |

[Examples 9-1 to 9-5 and Comparative Examples 9-1 and 9-2]

Light guide plates were manufactured in the same manner as in Comparative Example 1-3, with the exception that a serration process for forming patterns on the light incident part of the light guide plate was performed at different longest distances between patterns, of the pattern interval, under given conditions of the pattern shape, pattern size and pattern period as shown in Table 10 below. Briefly, by changing the density of the pattern-sparse regions, respective light guide plates were manufactured.
As such, the pattern interval designates the distance between adjacent patterns, and the pattern period (b) is obtained by measuring the distance between positions having a maximum pattern density.

[Table 10]

| | Pattern shape | Pattern size | Pattern interval | Pattern period (b) |
|---|---|---|---|---|
| Ex. 9-1 | Negative microlens | Diameter 100 $\mu$m | Shortest distance between patterns 150 $\mu$m, Longest distance between patterns 300 $\mu$m | 4 mm |
| Ex. 9-2 | Negative microlens | Diameter 100 $\mu$m | Shortest distance between patterns 150 $\mu$m, Longest distance between patterns 400 $\mu$m | 4 mm |
| Ex. 9-3 | Negative microlens | Diameter 100 $\mu$m | Shortest distance between patterns 150 $\mu$m, Longest distance between patterns 500 $\mu$m | 4 mm |
| Ex. 9-4 | Negative microlens | Diameter 100 $\mu$m | Shortest distance between patterns 150 $\mu$m, Longest distance between patterns 700 $\mu$m | 4 mm |
| Ex. 9-5 | Negative microlens | Diameter 100 $\mu$m | Shortest distance between patterns 150 $\mu$m, Longest distance between patterns 900 $\mu$m | 4 mm |
| C.Ex. 9-1 | Negative microlens | Diameter 100 $\mu$m | Shortest distance between patterns 150 $\mu$m, Longest distance between patterns 1100 $\mu$m | 4 mm |
| C.Ex. 9-2 | Negative microlens | Diameter 100 $\mu$m | Shortest distance between patterns 150 $\mu$m, Longest distance between patterns 1300 $\mu$m | 4 mm |

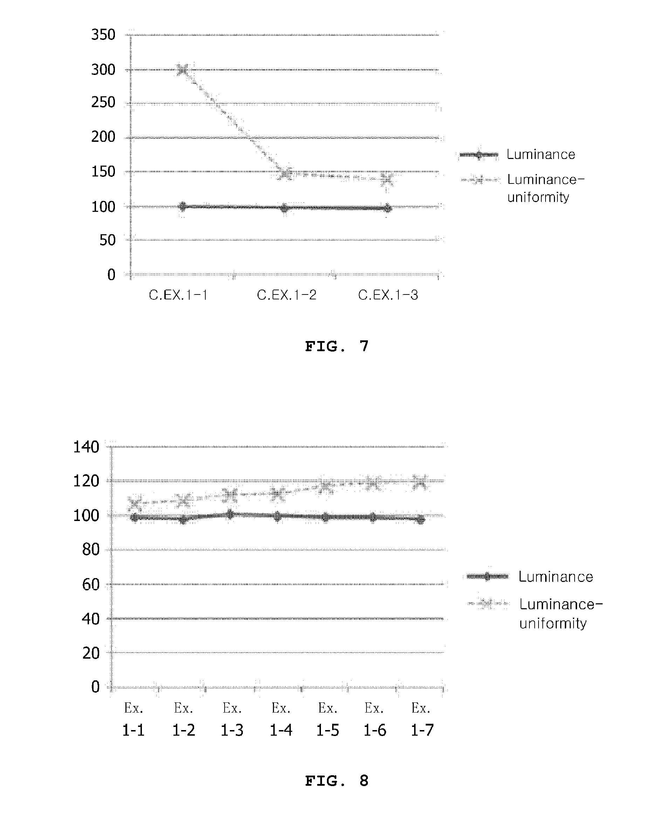

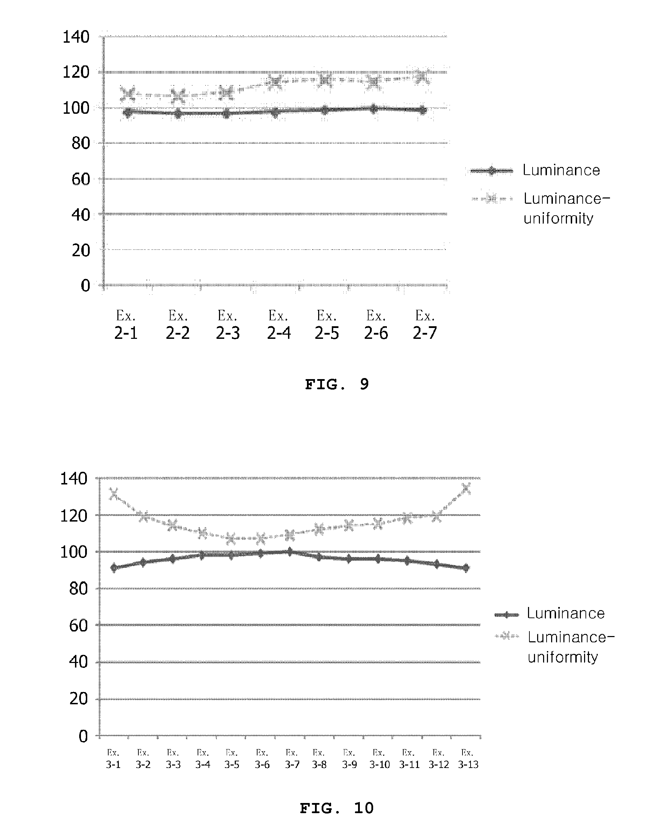

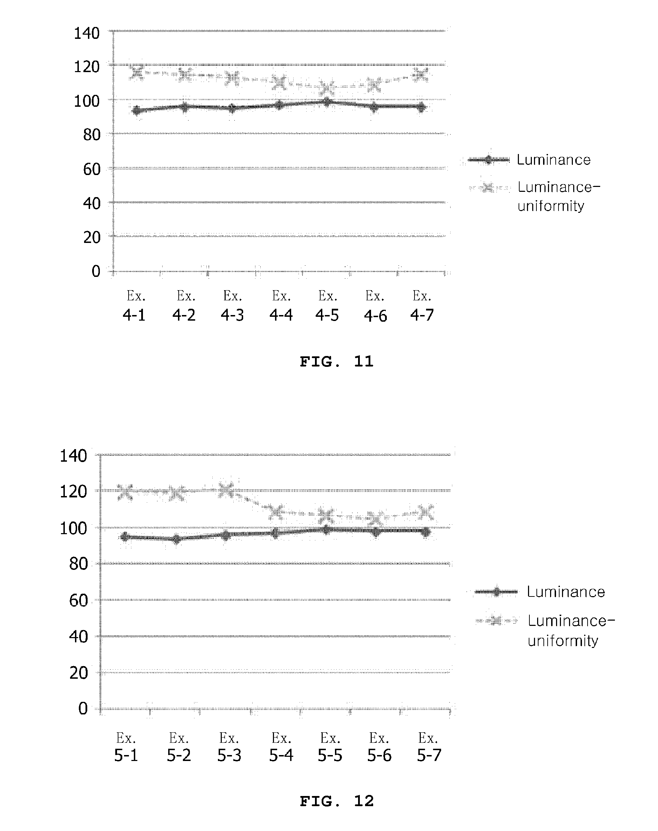

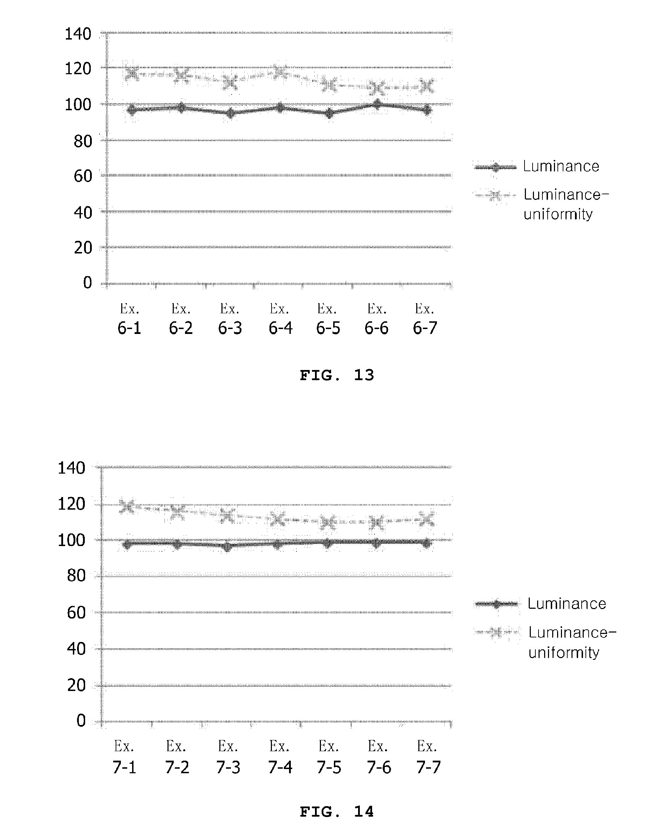

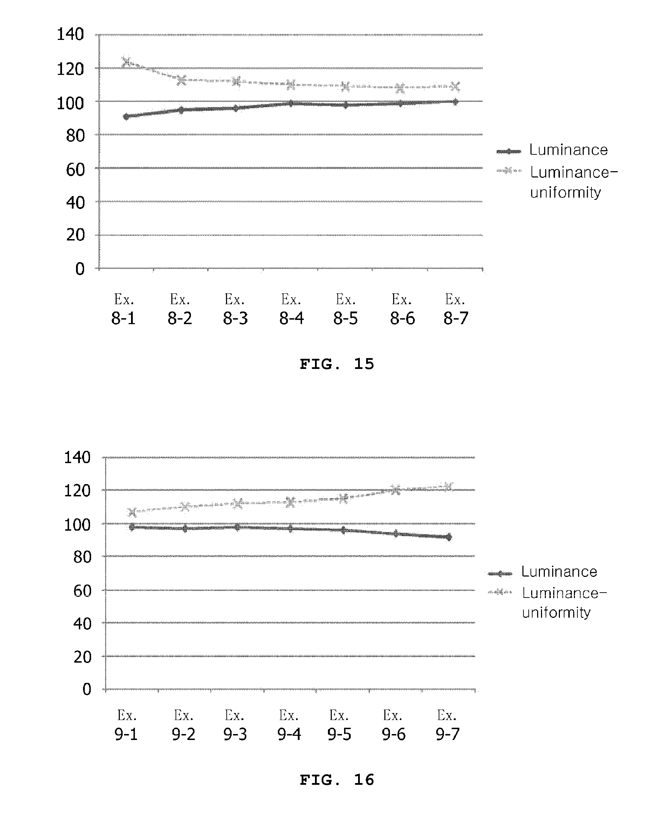

For the light guide plates of Comparative Examples and Examples, the rear side thereof was subjected to dot printing using silk screen printing so that light could be reflected to the front side, after which the light guide plate was mounted to an edge-type BLU, and luminance and luminance uniformity were measured as follows. The results are shown in Tables 11 to 20 below and FIGS. 7 to 16.

The BLU used for analysis was an LG Display (LM185WH2) useful for a monitor available from LG Electronics, and the distance between adjacent LEDs, namely, the light source period (a), is 5 mm.

(1) Measurement of luminance

In the BLU, luminance was sequentially measured using a luminance meter (BM-7, available from TOPCON) along directions of the light sources at a point 5 cm away from the light incident part at which the light sources were located.

Luminance was measured at the center of the BLU. Whenever measurement was performed, luminance could vary depending on the pattern shape, and thus the relative luminance values of Examples were calculated and represented while the luminance measured using the light guide plates of Comparative Examples was regarded as 100.

(2) Measurement of luminance uniformity

In the BLU, luminance was sequentially measured using a luminance meter (BM-7, available from TOPCON) along directions of the light sources at a point 5 cm away from the light incident part at which the light sources were located. Among the measured luminance values, the brightest portion located just in front of the light sources and the darkest portion between adjacent light sources were represented by a ratio of a maximum value and a minimum value. As this ratio was lower, luminance uniformity became higher.

The results of luminance and luminance uniformity of Comparative Examples and Examples are given in the following tables and graphs.

[Table 11]

| C.Ex. | Luminance | Luminance uniformity |
|---|---|---|
| 1-1 | 100 | 300 |
| 1-2 | 98 | 148 |
| 1-3 | 97 | 139 |

[Table 12]

| Ex. | Luminance | Luminance uniformity |
|-----|-----------|----------------------|
| 1-1 | 99 | 107 |
| 1-2 | 98 | 109 |
| 1-3 | 101 | 112 |
| 1-4 | 100 | 113 |
| 1-5 | 99 | 117 |
| 1-6 | 99 | 119 |
| 1-7 | 98 | 120 |

[Table 13]

| Ex. | Luminance | Luminance uniformity |
|-----|-----------|----------------------|
| 2-1 | 98 | 108 |
| 2-2 | 97 | 107 |
| 2-3 | 97 | 109 |
| 2-4 | 98 | 115 |
| 2-5 | 99 | 116 |
| 2-6 | 100 | 115 |
| 2-7 | 99 | 118 |

[Table 14]

| | Luminance | Luminance uniformity |
|-----|-----------|----------------------|
| C.Ex. 3-1 | 91 | 131 |
| C.Ex. 3-2 | 94 | 119 |
| Ex. 3-1 | 96 | 114 |
| Ex. 3-2 | 98 | 110 |
| Ex. 3-3 | 98 | 107 |
| Ex. 3-4 | 99 | 107 |
| Ex. 3-5 | 100 | 109 |
| Ex. 3-6 | 97 | 112 |
| Ex. 3-7 | 96 | 114 |
| Ex. 3-8 | 96 | 115 |
| Ex. 3-9 | 95 | 118 |
| C.Ex. 3-3 | 93 | 119 |
| C.Ex. 3-4 | 91 | 134 |

[Table 15]

| Ex. | Luminance | Luminance uniformity |
|-----|-----------|----------------------|
| 4-1 | 94 | 116 |
| 4-2 | 96 | 115 |
| 4-3 | 95 | 113 |
| 4-4 | 97 | 110 |
| 4-5 | 99 | 107 |
| 4-6 | 96 | 109 |
| 4-7 | 96 | 115 |

[Table 16]

| Ex. | Luminance | Luminance uniformity |
|-----|-----------|----------------------|
| 5-1 | 95 | 120 |
| 5-2 | 94 | 119 |
| 5-3 | 96 | 121 |
| 5-4 | 97 | 109 |
| 5-5 | 99 | 107 |
| 5-6 | 98 | 105 |
| 5-7 | 98 | 109 |

[Table 17]

| Ex. | Luminance | Luminance uniformity |
|-----|-----------|----------------------|
| 6-1 | 97 | 117 |
| 6-2 | 98 | 116 |
| 6-3 | 95 | 112 |
| 6-4 | 98 | 118 |
| 6-5 | 95 | 111 |
| 6-6 | 100 | 109 |
| 6-7 | 97 | 110 |

[Table 18]

| Ex. | Luminance | Luminance uniformity |
|-----|-----------|----------------------|
| 7-1 | 98 | 119 |
| 7-2 | 98 | 116 |
| 7-3 | 97 | 114 |
| 7-4 | 98 | 112 |
| 7-5 | 99 | 110 |
| 7-6 | 99 | 110 |
| 7-7 | 99 | 112 |

[Table 19]

|  | Luminance | Luminance uniformity |
|---|---|---|
| C.Ex. 8-1 | 91 | 124 |
| Ex. 8-1 | 95 | 113 |
| Ex. 8-2 | 96 | 112 |
| Ex. 8-3 | 99 | 110 |
| Ex. 8-4 | 98 | 109 |
| Ex. 8-5 | 99 | 108 |
| Ex. 8-6 | 100 | 109 |

[Table 20]

| Ex. | Luminance | Luminance uniformity |
|---|---|---|
| 9-1 | 98 | 107 |
| 9-2 | 97 | 110 |
| 9-3 | 98 | 112 |
| 9-4 | 97 | 113 |
| 9-5 | 96 | 115 |
| 9-6 | 94 | 120 |
| 9-7 | 92 | 122 |

As is apparent from the above results, when the luminance is decreased to 95 or less or when the luminance uniformity is increased to 120 or more, the effects of the patterns are considered to be insignificant.

For the pattern density, as the pattern period (b) becomes similar to the light source period (a), namely, the distance between adjacent LEDs, luminance uniformity may further increase. Also, as the pattern density is higher under the condition that the pattern size is 300 ~ 500 $\mu$m, desirable luminance uniformity may result.

For the pattern shape, there is no significant difference between positive and negative patterns, and thus these patterns may be effective in increasing luminance uniformity without loss of luminance.

## Claims

1. A light guide plate, comprising a light incident part to which light is incident from a light source located at a lateral side of the light guide plate and which is imparted with patterns,
wherein the patterns are formed in a gradation from a position having a maximum pattern density to a position having a minimum pattern density and also in a gradation from a position having a minimum pattern density to a position having a maximum pattern density.

2. The light guide plate of claim 1, wherein the patterns are formed in a gradation depending on a distance between the patterns as defined by Relation I below:

$$b_{min} < b_1 < [b_n <]_{n-1} \; b_{max} \quad (I)$$

wherein $b_{min}$ or $b_{max}$ is the distance between adjacent patterns, $b_{min}$ is a shortest distance between the adjacent patterns, $b_{max}$ is a longest distance between the adjacent patterns, $[b_n <]_{n-1}$ is a repeating unit depending on n-1 in which $b_n$ changes in a sequence form when repeated by n-1 where n is an integer of at least 2.

3. The light guide plate of claim 1, wherein the patterns are microlens patterns or lenticular patterns.

4. The light guide plate of claim 1, wherein the patterns are microlens patterns, and $b_{min}$ and $b_{max}$ are defined by Relations II and III below:

$$b_{min} > (1/10) \times r \qquad (II)$$

$$b_{max} < 20 \times r \qquad (III)$$

wherein $b_{min}$ is a shortest distance between adjacent patterns, $b_{max}$ is a longest distance between the adjacent patterns, and 2r is a cross-sectional diameter of the microlens patterns.

5. The light guide plate of claim 4, wherein the microlens patterns have a cross-sectional diameter (2r) of 1 $\mu$m ~ 1 mm.

6. The light guide plate of claim 1, wherein the patterns have a pattern period (b) as defined by Relation IV below:

$$\frac{1}{10} \times a < b < 10 \times a \qquad (IV)$$

wherein a is a light source period, b is the pattern period that is a period between positions having a maximum pattern density or a period between positions having a minimum pattern density.

7. The light guide plate of claim 1, wherein the patterns are positive or negative patterns.

8. The light guide plate of claim 1, wherein the patterns have a size larger in a pattern-dense region than in a pattern-sparse region.

9. A light guide plate, comprising a light incident part to which light is incident from a light source located at a lateral side of the light guide plat and which is imparted with patterns,
wherein the light incident part includes a bright portion corresponding to the light source and a dark portion except for the bright portion, and the bright portion has patterns and the dark portion has no patterns.

10. The light guide plate of claim 9, wherein the patterns have a pattern period (c) as defined by Relation V below:

$$\frac{7}{10} \times a < c < \frac{13}{10} \times a \qquad (V)$$

wherein a is a light source period, c is the pattern period that is a period between positions selected from among a pattern start position, a mid position and a pattern end position, of a pattern formation region.

11. The light guide plate of claim 9, wherein the patterns have positive or negative hemispherical microlens patterns, with a diameter of 1 $\mu$m ~ 3 mm.

12. The light guide plate of claim 9, wherein the patterns are positive or negative lenticular patterns, with a length of 10 $\mu$m ~ 10 mm.

13. The light guide plate of claim 1 or 9, wherein the light guide plate comprises any material selected from the group consisting of a polycarbonate resin, a polystyrene resin, an acrylic resin, an olefin resin, copolymers thereof, mixtures thereof and derivatives thereof.

14. A backlight unit, comprising the light guide plate of claim 1 or 9.

FIG. 1

FIG. 2

(A)

b

(B)

b

FIG. 3

b

FIG. 4

FIG. 5

FIG. 6

**FIG. 7**

**FIG. 8**

FIG. 9

FIG. 10

FIG. 11

FIG. 12

**FIG. 13**

**FIG. 14**

FIG. 15

FIG. 16

## INTERNATIONAL SEARCH REPORT

| | |
|---|---|
| International application No. | |
| **PCT/KR2013/001668** | |

### A. CLASSIFICATION OF SUBJECT MATTER

*G02B 6/10(2006.01)i, G02F 1/13357(2006.01)i*

According to International Patent Classification (IPC) or to both national classification and IPC

### B. FIELDS SEARCHED

Minimum documentation searched (classification system followed by classification symbols)

G02B 6/10; F21S 2/00; G02F 1/13357; F21Y 101/02; F21V 8/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: light guide plate, light entrance edge, gradation, pattern, lenticular pattern, back light unit

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-218693 A (ASAHI KASEI CORP.) 30 September 2010<br>See abstract, paragraphs [0018], [0020] and [0029]-[0030] and figure 5. | 1,7-9,13-14<br><br>3,11-12<br>2,4-6,10 |
| Y | LEE, Jung Ho et al., Study on the Simulation Model of Edge-lit Backlight for Improving Illuminance Uniformity, Korean Journal of Optics & Photonics vol. 21 no. 2, 02 April 2010, pp. 61-68, ISSN 1225-6285.<br>See abstract, main text section 2.2. and figure 3. | 3,11-12 |
| A | KR 10-0787913 B1 (ATMS CO., LTD.) 24 December 2007<br>See abstract, claims 1-3 and figure 3. | 1-14 |
| A | US 2008-0212339 A1 (HARA et al.) 04 September 2008<br>See abstract, paragraphs [0107]-[0118] and figures 12-21. | 1-14 |
| A | KR 10-0484536 B1 (HANSUNG ELCOMTEC CO.,LTD) 20 April 2005<br>See abstract, claim 1 and figures 3a-4b. | 1-14 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 MAY 2013 (28.05.2013) | **29 MAY 2013 (29.05.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/001668**

| Patent document cited in search report | Publication date | Patent family member | Publication date |
|---|---|---|---|
| JP 2010-218693 A | 30.09.2010 | NONE | |
| KR 10-0787913 B1 | 24.12.2007 | NONE | |
| US 2008-0212339 A1 | 04.09.2008 | CN 100353225 C0 | 05.12.2007 |
| | | CN 101089662 A | 19.12.2007 |
| | | CN 101089662 C0 | 19.12.2007 |
| | | CN 1504808 A0 | 16.06.2004 |
| | | JP 2005-129271 A | 19.05.2005 |
| | | JP 2009-135116 A | 18.06.2009 |
| | | JP 4436105 B2 | 24.03.2010 |
| | | KR 10-2004-0048332 A | 09.06.2004 |
| | | TW 237723 B | 11.08.2005 |
| | | US 2004-0130882 A1 | 08.07.2004 |
| | | US 2005-0180166 A1 | 18.08.2005 |
| | | US 2005-0180719 A1 | 18.08.2005 |
| | | US 2005-0180720 AI | 18.08.2005 |
| | | US 6974241 B2 | 13.12.2005 |
| | | US 7356239 B2 | 08.04.2008 |
| | | US 7478937 B2 | 20.01.2009 |
| | | US 7604388 B2 | 20.10.2009 |
| | | US 7726864 B2 | 01.06.2010 |
| KR 10-0484536 B1 | 20.04.2005 | NONE | |

Form PCT/ISA/210 (patent family annex) (July 2009)